# FASCICULE DE BREVET EUROPEEN

(11) **EP 2 341 037 B1**
(45) Date de publication et mention de la délivrance du brevet: **28.02.2018**
(21) Numéro de dépôt: 09306335.2
(22) Date de dépôt: 29.12.2009
(51) Int. Cl.: C03C 17/00, C03C 17/04

(54) **Revêtement masquant entourant le col de récipients du type bouteille ou carafe**
Verdeckende Verkleidung für den Hals von Behältern vom Typ Flasche oder Karaffe
Covering surrounding the neck of containers such as bottles or carafes

(43) Date de publication de la demande: 06.07.2011
(73) Titulaire: Baccarat S.A., 54120 Baccarat (FR)
(72) Inventeur: Kurek, Laurent, 54120 Baccarat (FR)
(74) Mandataire: Littolff, Denis

(56) Documents cités:
- FR-A- 1 146 896
- NL-C- 1 005 955

## Description

La présente invention a trait à un système destiné à masquer les produits de collage utilisés pour la fixation de frettes ou de bagues décoratives autour du col de bouteilles ou de carafes. A titre principal, ce sont les récipients hauts de gamme qui font l'objet d'une telle décoration, par exemple les carafes en cristal utilisées pour commercialiser des alcools de prestige, tels que du cognac ou du whisky vieillis en fût. L'invention concerne aussi un procédé de marquage correspondant au système précité.

Pour des bouteilles, en particulier des bouteilles de vin, il est connu d'employer des enveloppes plombées pour recouvrir le bouchon et le goulot des bouteilles. Le document NL1005955 décrit ce type d'enveloppes, qui sont à base de poudre d'émail et de poudre de verre.

La connotation « produit de luxe » qui s'applique aux récipients hauts de gamme implique bien entendu une réalisation esthétique irréprochable au niveau de la fermeture du récipient, à la mesure de la qualité esthétique du récipient, notamment lorsqu'il est lui-même un article de valeur par exemple réalisé en cristal soufflé de manière artisanale. La décoration, au niveau du col d'une bouteille est connu. Elle peut s'effectuer par un procédé d'émaillage du col comme cela est décrit dans le document FR 1 146 896.

Néanmoins, pour une bouteille, mais également pour une carafe, la décoration du col peut également s'effectuer à l'aide de frettes ou de bagues en métal ou en plastique, dont la forme et l'aspect apportent une plus-value en termes de décoration. Ces frettes ou bagues sont en général assemblées au reste de la carafe, dans la région du col, par une opération de collage.

La couche de matière adhésive liquide est dans ce cas située entre la surface interne de la bague ou de la frette et la surface périphérique externe du col. Le problème est que, ledit col étant transparent, la colle devient visible par l'intérieur lorsque le récipient est débouché. L'apparition de la colle est inesthétique du fait de la répartition non uniforme de la matière adhésive au moment du collage et produit des « auréoles» de matière visible à travers l'épaisseur du verre transparent du col, n'est pas à la hauteur des exigences esthétiques qui doivent s'attacher à ce type de produits. Les critères ayant cours pour des articles se réclamant des circuits de commercialisation des produits de luxe ne sont en l'occurrence pas satisfaits du fait de la présence des imperfections esthétiques résultant de taches de colle.

La présente invention remédie à ce problème, en proposant une solution qui supprime l'effet inesthétique des produits de collage utilisés dans un tel contexte.

L'invention a principalement trait à un procédé de masquage des produits de collage utilisés pour la fixation de frettes ou de bagues décoratives autour du col de bouteille ou de carafe, caractérisé en ce qu'il comporte les étapes suivantes :
- Dépôt, sur une hauteur prédéterminée du col, d'un revêtement d'émail ou de peinture à base d'un ou plusieurs métaux, ou leurs alliages, ou des oxydes de métaux, et dont la face extérieure dudit revêtement ayant une texture présentant des caractéristiques mécaniques permettant l'adhérence desdits produits de collage ;
- fixation dudit dépôt sur le col, selon le matériau déposé, par séchage, ou polymérisation, ou vitrification, ou adsorption, ou liaison chimique, ...
- fixation par collage de frettes ou d'une bague sur ledit revêtement.

De préférence, et comme on l'a mentionné auparavant, s'il s'agit d'un revêtement émail, il est constitué d'une fritte d'émail déposée à haute température autour du col par des procédés connus en soi, en vue de créer des liaisons fortes entre le substrat et ledit revêtement.

L'invention porte également sur une bouteille ou une carafe comprenant une frette ou une bague décoratives fixée par collage autour du col, comprenant un système de marquage, constitué d'un revêtement, recevant les
produits de collage de la frette ou de la bague, le revêtement entourant la surface externe dudit col, et dont la face extérieure a une texture présentant des caractéristiques mécaniques permettant la fixation par collage de la frette ou la bague sur la matière du col.

Il y a par conséquent création d'une barrière optique qui masque la colle, sans altérer la tenue mécanique de la décoration, qu'elle soit constituée de frettes ou de bagues.

Ce revêtement consiste en un dépôt d'émail. Alternativement, il peut également s'agir d'un dépôt d'une couche de peinture.

Les technologies d'application du dépôt varient selon le matériau utilisé, l'émail pouvant par exemple être disponible sous forme d'une fritte déposée sur le récipient.

Selon l'invention, le dépôt est basé sur un ou plusieurs métaux ou leurs alliages ou des oxydes de métaux, c'est-à-dire être en réalité et de manière générale basé sur un matériau métallique.

De préférence, ce dépôt métallique peut comprendre un alliage basé sur de l'or, ou du palladium, ou encore du platine, conférant au produit un aspect parfaitement compatible avec la connotation « produit de luxe » mentionnée auparavant.

Comme on l'a souligné ci-dessus, quel que soit le matériau utilisé, il doit respecter la tenue mécanique finale de la matière adhésive. En d'autres termes, qu'il soit question de peinture ou d'un émail, la colle doit y adhérer de manière à pouvoir fixer la décoration, sous forme de frette ou de bague, avec la même solidité que pour les produits actuels fixés directement sur le verre.

Du fait de l'existence d'une barrière optique supplémentaire, aucune trace de colle n'est plus visible à l'ouverture du récipient. Au contraire, l'aspect est celui d'un revêtement uniforme, par exemple doré, qui rend l'esthétique irréprochable même pour ce qui concerne l'intérieur du col, rendant le produit tout à fait conforme aux exigences traditionnelles des industries du luxe.

## Revendications

1. Procédé de masquage des produits de collage utilisés pour la fixation de frettes ou de bague décoratives autour du col de bouteilles ou de carafes, **caractérisé en ce qu'**il comporte les étapes suivantes :
- dépôt, sur une hauteur prédéterminée du col, d'un revêtement d'émail ou de peinture à base d'un ou plusieurs métaux, ou leurs alliages, ou des oxydes de métaux, et dont la face extérieure dudit revêtement ayant une texture présentant des caractéristiques mécaniques permettant l'adhérence desdits produits de collage ;
- fixation dudit dépôt sur le col, selon le matériau déposé, par exemple par séchage, ou polymérisation, ou vitrification, ou adsorption, ou liaison chimique ;
- fixation par collage de frettes ou d'une bague sur ledit revêtement.

2. Procédé de masquage des produits de collage selon la revendication précédente, **caractérisé en ce que** le revêtement émail est constitué d'une fritte d'émail déposée à haute température autour du col en vue de créer des liaisons fortes entre le substrat et ledit revêtement.

3. Bouteille ou carafe comprenant une frette ou une bague décorative fixée par collage autour du col de ladite bouteille ou carafe, **caractérisé en ce que** ledit col comprend sur sa surface externe un système de masquage des produits de collage de ladite frette ou bague consistant en un revêtement, recevant lesdits produis de collage, et consistant en un dépôt d'émail ou d'une couche de peinture entourant la surface externe dudit col, dont la face extérieure a une texture présentant des caractéristiques mécaniques permettant l'adhérence desdits produits de collage le dépôt étant basé sur un ou plusieurs métaux, ou leurs alliages, ou des oxydes de métaux.

4. Bouteille ou carafe selon la revendication précédente, **caractérisé en ce que** le dépôt métallique comprend un alliage basé sur de l'or, ou du palladium, ou du platine.

## Patentansprüche

1. Verfahren zum Verdecken der Klebeprodukte, die zum Fixieren von dekorativen Hülsen oder Ring um den Hals von Flaschen oder von Karaffen verwendet werden, **dadurch gekennzeichnet, dass** es die folgenden Schritte aufweist:
- Aufbringen, in einer bestimmten Höhe des Halses, einer Email- oder Lackbeschichtung auf der Basis von einem oder mehreren Metallen oder ihren Legierungen oder von Metalloxiden, und wobei die Außenseite der Beschichtung eine Textur hat, die mechanische Merkmale aufweist, die das Haften der Klebeprodukte erlauben,
- Fixieren des Depots auf dem Hals je nach aufgebrachtem Material, beispielsweise durch Trocknen oder Polymerisation oder Vitrifizieren oder Adsorption oder chemische Bindung,
- Fixieren durch Kleben von Hülsen oder eines Rings auf der Beschichtung.

2. Verfahren zum Verdecken der Klebeprodukte nach vorangehendem Anspruch, **dadurch gekennzeichnet, dass** die Emailbeschichtung von einer Emailfritte gebildet ist, die bei hoher Temperatur um den Hals zwecks Bildung starker Verbindungen zwischen dem Substrat und der Beschichtung aufgebracht wird.

3. Flasche oder Karaffe, umfassend eine dekorative Hülse oder Ring, fixiert durch Kleben um den Hals der Flasche oder Karaffe, **dadurch gekennzeichnet, dass** der Hals auf seiner Außenfläche ein System zum Verdecken der Klebeprodukte der Hülse oder des Rings umfasst, bestehend aus einer Beschichtung, welche die Klebeprodukte empfängt, und bestehend aus einem Emaildepot oder eine Lackschicht, die die Außenfläche des Halses umgibt, wobei die Außenseite eine Textur hat, die mechanische Merkmale aufweist, die das Haften der Klebeprodukte erlauben, wobei das Depot auf einem oder mehreren Metallen oder ihren Legierungen oder Metalloxiden basiert.

4. Flasche oder Karaffe nach vorangehendem Anspruch, **dadurch gekennzeichnet, dass** das Metalldepot eine Legierung auf der Basis von Gold oder von Palladium oder von Platin umfasst.

## Claims

1. Method for masking adhesive products used to attach bands or decorative rings around the neck of bottles or carafes, **characterized in that** it comprises the following steps:
- depositing, at a predetermined height of the neck, a coating in enamel or paint based on one or more metals, or alloys thereof, or metal oxides, the outer surface of said coating having a texture exhibiting mechanical characteristics allowing adhesion of said adhesive products;
- fixing said deposit on the neck, depending on the deposited material, for example by drying, or polymerization, or vitrification, or adsorption, or chemical bonding;
- attaching bands or a ring by adhesion onto said coating.

2. The method for masking adhesive products according to the preceding claim, **characterized in that** the enamel coating is formed of an enamel frit deposited at high temperature around the neck to create strong bonds between the substrate and said coating.

3. Bottle or carafe comprising a band or decorative ring attached by adhesion around the neck of said bottle or carafe, **characterized in that** said neck, on its outer surface, comprises a system for masking the adhesive products of said band or ring consisting of a coating receiving said adhesive products, and consisting of the deposit of enamel or a layer of paint surrounding the outer surface of said neck, the outer surface of which has a texture having mechanical characteristics allowing the adhesion of said adhesive products, the deposit being based on one or more metals or alloys thereof, or metal oxides.

4. The bottle or carafe according to the preceding claim, **characterized in that** the metal deposit comprises a gold, palladium or platinum alloy.
